# EUROPEAN PATENT APPLICATION

(11) **EP 2 540 786 A1**
(43) Date of publication of application: **02.01.2013**
(21) Application number: 11747362.9
(22) Date of filing: 23.02.2011
(51) Int. Cl.: C09D 183/04, C09D 4/00, C09D 183/07

(54) **COATING AGENT COMPOSITION**

(30) Priority: 26.02.2010 JP 2010042637
(71) Applicant: Nippon Steel Chemical Co., Ltd., Chiyoda-ku Tokyo 101-0021 (JP)
(72) Inventor: ISOZAKI Masayoshi, Kitakyushu-shi Fukuoka 804-8503 (JP)
(74) Representative: Vossius & Partner
(86) International application number: PCT/JP2011/053915
(87) International publication number: WO 2011/105401

(57) **Abstract**

Provided is a coating agent composition capable of forming a transparent coating which has weather resistance and resistance to abrasion, scratch, and the like and has a transparent and glossy finish. The coating agent composition is a coating agent composition, including: a polymerizable resin compound including as a main component a polyorganosilsesquioxane; and a curing catalyst for curing the polymerizable resin compound, in which the coating agent composition has a viscosity of 1 to 10,000 mPa·s. The coating agent composition is suitably a coating agent composition, in which the polymerizable resin compound includes a silicone resin including a polyorganosilsesquioxane having a cage-type structure.

## Description

### Technical Field

The present invention relates to a coating agent composition, and more particularly, to a coating agent composition which may be used for automobile applications and the like.

### Background Art

A radiation-curable coating and a thermosetting coating are each used as a top coating in automobile and coating markets. A top coating (transparent or colored) for the automobile industry is required to have a very high level of transparency, including high gloss and high image discrimination, to achieve a desired visual effect. Another important requirement for the coating for automobiles is mar resistance, and consumers' expectations have been increasing on durability of a finish coating for automobiles.

A radiation-curable abrasion-resistant coating composition is suitable for use in the industry. For example, US 5840428 A discloses an organically-modified radiation-curable siloxane and a production method therefor. The siloxane is produced by allowing a composition containing a polyfunctional acrylate to react with a reaction product generated by cohydrolysis and cocondensation of an alkoxy-functional organometallic compound, an alkoxysilane, and water. The composition reacts (cures) by exposure to UV ray irradiation.

Further, US 4224211 A discloses a thermosetting coating composition. The coating composition improves surface hardness and chemical resistance of a base material such as a plastic product, a wooden product, or a metallic product. The composition includes A) a partially hydrolyzed silicon compound and B) anacryliccopolymer. The partially hydrolyzed silicon compound is consisting essentially of co-partial hydrolyzates of an organic silicon compound of the formula RₙSi (OR) ₄₋ₙ (in the formula, n represents 1 to 3, R represents a hydrocarbon group, and R' represents an alkyl group) and a tetraalkoxysilane, or a mixture of partial hydrolyzates of each organic silicon compound and tetraalkoxysilane. The acrylic copolymer is a copolymer of an alkyl (meth) acrylate and a hydroxyalkyl (meth)acrylate.

JP 05-209031 A discloses a resin composition which may be used as a transparent coating for automobiles. The composition maybe cured by heat or by exposure to light. The composition includes a polyorganosilsesquioxane, a curable graft copolymer, a photosensitizer, and/or a radical polymerization initiator.

### Citation List

### Patent Literature

[PTL 1] US 5840428 A
[PTL 2] US 4224211 A
[PTL 3] JP 05-209031 A

### Summary of Invention

### Technical Problem

The mar resistance may be improved by blending a surfactant in a coating film system so that an additive moves to an interface between a coating film and air to decrease surface energy of the coating film. However, in this method, the additive moves to the outside of the coating film before service life of an automobile, and a high level of the additive has an adverse effect on, in particular, an ability to overcoat the automobile during repair. That is, the method is disadvantageous in that the top coating cannot be applied or cannot adhere to the automobile.

Therefore, an object of the present invention is to provide a composition which may be used for forming a transparent coating having good mar resistance. Another object of the present invention is to provide a composition for forming a coating film which has a transparent and glossy finish and has weather resistance and excellent resistance to abrasion and scratch when the composition is cured. Still another obj ect of the present invention is to provide a composition which can impart improved mar resistance which lasts preferably over the service life of the automobile.

### Solution to Problem

That is, the present invention provides a coating agent composition, including: a polymerizable resin compound including as a main component a polyorganosilsesquioxane; and a curing catalyst for curing the polymerizable resin compound, in which the coating agent composition has a viscosity of 1 to 10,000 mPa·s.

Further, the present invention provides a coating agent composition, in which the polymerizable resin compound includes a silicone resin including as a main component a polyorganosilsesquioxane which is represented by the following general formula (1):

[RSiO_{3/2}]n (1)

where R represents an organic functional group having a (meth) acryloyl group, and n represents 8, 10, or 12, and which has a cage-type structure in a structural unit.

In addition, the present invention provides a coating agent composition, in which the polymerizable resin compound includes a mixture including: a silicone resin (a) including as a main component a polyorganosilsesquioxane which is represented by the general formula (1):

[RSiO_{3/2}]n (1)

where R represents an organic functional group having a (meth) acryloyl group, and n represents 8, 10, or 12, and which has a cage-type structure in a structural unit; and an unsaturated compound (b) including in a molecule at least one unsaturated group represented by -R³-CR⁴=CH₂ or -CR⁴=CH₂, where R³ represents an alkylene group, an alkylidene group, or an -OCO- group, and R⁴ represents a hydrogen atom or an alkyl group, and being radically copolymerizable with the silicone resin, the silicone resin (a) and the unsaturated compound (b) being blended at a weight ratio of 1 to 99:99 to 1.

The present invention suitably provides a radically curable coating agent composition which may be used for automobile applications. The composition includes: a reaction product generated from a polyorganosilsesquioxane which is obtained by hydrolysis and cocondensation of an alkoxysilane and has a cage structure and an unsaturated compound radically copolymerizable with the polyorganosilsesquioxane; and a curing agent. When the composition is cured, a coating film which has a transparent and glossy finish and has weather resistance and excellent resistance to abrasion, scratch, chemicals, water, and pollutions is formed.

The present invention is described below in detail.
The coating agent composition of the present invention includes, as essential components, a polymerizable resin compound including as a main component a polyorganosilsesquioxane (hereinafter, also referred to as silicone resin of the present invention) and a curing catalyst. A cured coating film is obtained by radical copolymerization of the coating agent composition of the present invention.

The silicone resin of the present invention to be used in the present invention includes as a main component a polyorganosilsesquioxane which is represented by the following general formula (1) :

[RSiO_{3/2}]n (1)

where R represents an organic functional group having a (meth) acryloyl group, and n represents 8, 10, or 12, and which has a cage-type structure in a structural unit (hereinafter, also referred to as cage-type polyorganosilsesquioxane). In the general formula (1), R represents an organic functional group having a (meth) acryloyl group, and n represents 8, 10, or 12. R represents preferably an organic functional group represented by the following general formula (4). In the general formula (4), m represents an integer of 1 to 3, and R¹ represents a hydrogen atom or a methyl group. It should be noted that the general formula (4) may also be represented by CH₂=CR¹-COO- (CH₂)ₘ-.

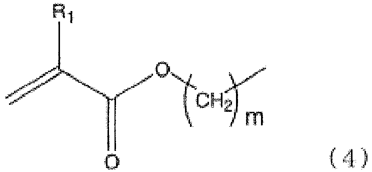

The silicone resin of the present invention has a reactive functional group ona silicon atom in its molecule. Specific examples of the structure of the cage-type polyorganosilsesquioxane represented by the general formula (1) in which n represents 8, 10, or 12 include cage-type structures represented by the following structural formulae (5), (6), and (7). It should be noted that, in the following formulae, R represents the same as in the general formula (1).

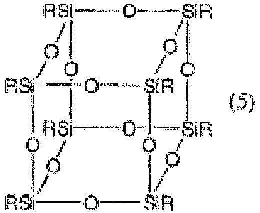

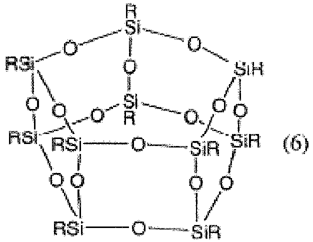

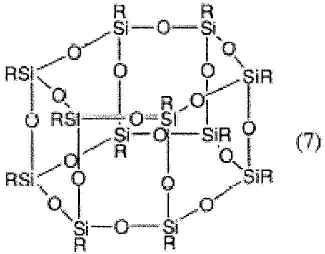

The silicone resin of the present invention may be produced by a method described in JP 2007-293307 A or the like. For example, a silicon compound represented by RSiX₃ is hydrolyzed in the presence of a polar solvent and a basic catalyst while part of the compound is condensed. The resultant hydrolysis product is further condensed again in the presence of a non-polar solvent and a basic catalyst. Thus, the silicone resin of the present invention can be obtained. In this case, R represents an organic functional group having a (meth) acryloyl group, and X represents a hydrolyzable group. R preferably represents a group represented by the general formula (4). Preferred specific examples of R include a 3-methacryloxypropyl group, a methacryloxymethyl group, and a 3-acryloxypropyl group.

The hydrolyzable group X is not particularly limited as long as it is hydrolyzable. Examples thereof include an alkoxy group and an acetoxy group. Of those, an alkoxyl group is preferred. Examples of the alkoxyl group include a methoxy group, an ethoxy group, n- and i-propoxy groups, and n-, i-, and t-butoxy groups. Of those, a methoxy group is preferred because of its high reactivity.

Preferred examples of the silicon compound represented by RSiX₃ include methacryloxymethyltriethoxysilane, methacryloxymethyltrimethoxysilane, 3-methacryloxypropyltrichlorosilane, 3-methacryloxypropyltrimethoxysilane, 3-methacryloxypropyltriethoxysilane, 3-acryloxypropyltrimethoxysilane, and 3-acryloxypropyltrichlorosilane. Of those, 3-methacryloxypropyltrimethoxysilane, which is easy to obtain a raw material, is preferably used.

Examples of the basic catalyst to be used in the hydrolysis reaction include an alkali metal hydroxide such as potassium hydroxide, sodium hydroxide, or cesium hydroxide and an ammonium hydroxide salt such as tetramethylammonium hydroxide, tetraethylammonium hydroxide, tetrabutylammonium hydroxide, benzyltrimethylammonium hydroxide, or benzyltriethylammonium hydroxide. Of those, tetramethylammonium hydroxide is preferably used from the viewpoint of having a high catalytic activity. The basic catalyst is generally used in the form of an aqueous solution.

With regard to conditions for the hydrolysis reaction, the reaction temperature is preferably 0 to 60°C, more preferably 20 to 40°C. When the reaction temperature is less than 0°C, the reaction rate decreases to cause remaining of an unreacted hydrolyzable group, resulting in prolongation of the reaction time. On the other hand, when the reaction temperature is more than 60°C, the reaction rate is too high to cause a complex condensation reaction, resulting in promotion of an increase in the molecular weight of the hydrolysis product. In addition, the reaction time is preferably 2 hours or more. When the reaction time is less than 2 hours, the hydrolysis reaction proceeds insufficiently to cause remaining of an unreacted hydrolyzable group.

The hydrolysis reaction needs to be carried out in the presence of water, and the water may be supplied from an aqueous solution of the basic catalyst or maybe added separately. The amount of water is at least an amount sufficient for hydrolysis of the hydrolyzable group, preferably 1.0 to 1.5 times the theoretical amount. In addition, it is necessary to use an organic polar solvent in hydrolysis, and as the organic polar solvent, there may be used an alcohol such as methanol, ethanol, or 2-propanol, or other organic polar solvents. A water-soluble lower alcohol having 1 to 6 carbon atoms is preferably used, and 2-propanol is more preferably used. When a non-polar solvent is used, the hydrolysis reaction proceeds insufficiently to cause remaining of an unreacted alkoxyl group because a uniform reaction system cannot be obtained, which is not preferred.

After completion of the hydrolysis reaction, water or a water-containing reaction solvent is separated. The separation of the water or water-containing reaction solvent may be carried out by means such as reduced-pressure evaporation. In order to sufficiently remove water and other impurities, for example, there maybe employedmeans involving adding anon-polar solvent to dissolve a hydrolysis reaction product, washing the solution with saline or the like, and drying the solution with a drying agent such as anhydrous magnesium sulfate. When the non-polar solvent is separated by means such as evaporation, the hydrolysis reaction product may be collected. However, when the non-polar solvent may be used as a non-polar solvent to be used in the next reaction, it is not necessary to separate the solvent.

In the hydrolysis reaction, a condensation reaction of a hydrolyzate is caused in addition to hydrolysis. The hydrolysis product obtained by the condensation reaction of the hydrolyzate usually has a number-average molecular weight of 1,400 to 5,000 and is a colorless viscous liquid. The hydrolysis product is an oligomer having a number-average molecular weight of 1,400 to 3,000, which varies depending on the reaction conditions. Most of, preferably almost all of the hydrolyzable groups X's are replaced by OH groups, and most of, preferably 95% or more of the OH groups are condensed. The structure of the hydrolysis product includes a plurality of kinds of cage-type, ladder-type, and random-type silsesquioxanes. Even if the compound has the cage-type structure, the product hardly has a complete cage-type structure and mainly has an incomplete cage-type structure in which part of the cage is opened. Therefore, a silsesquioxane having a cage-type structure is selectively produced by further heating the hydrolysis product obtained by hydrolysis in an organic solvent in the presence of a basic catalyst to condense (re-condense) a siloxane bond.

After separation of water or the water-containing reaction solvent, a re-condensation reaction is carried out in the presence of a non-polar solvent and a basic catalyst. With regard to reaction conditions for the re-condensation reaction, the reaction temperature falls within the range of preferably 100 to 200°C, more preferably 110 to 140°C. In addition, when the reaction temperature is too low, the reaction does not proceed because a driving force sufficient for the re-condensation reaction cannot be obtained. When the reaction temperature is too high, it is necessary to suppress the reaction temperature or to add a polymerization inhibitor or the like because the (meth)acryloyl group may cause a self-polymerization reaction. The reaction time is preferably 2 to 12 hours. The amount of the non-polar solvent used is preferably an amount sufficient for dissolving the hydrolysis reaction product. The amount of the basic catalyst used falls within the range of 0 . 1 to 10 wt% relative to the hydrolysis reactionproduct.

The non-polar solvent may be a solvent which has no or little solubility in water, and is preferably a hydrocarbon-based solvent. Examples of the hydrocarbon-based solvent include a non-polar solvent having a low boiling point, suchas toluene, benzene, or xylene. Of those, toluene is preferably used. As the basic catalyst, a basic catalyst to be used in a hydrolysis reaction may be used. Examples of the basic catalyst include an alkali metal hydroxide such as potassium hydroxide, sodium hydroxide, or cesium hydroxide and an ammonium hydroxide salt such as tetramethylammonium hydroxide, tetraethylammonium hydroxide, tetrabuthylammonium hydroxide, benzyltrimethylammonium hydroxide, or benzyltriethylammonium hydroxide. Of those, a catalyst soluble in a non-polar solvent, such as a tetraalkylammonium, is preferred.

In addition, the hydrolysis product to be used in the re-condensation is preferably washed with water, dehydrated, and concentrated before use, but may be used without water washing and dehydration. In this reaction, water may be present. However, it is not necessary to add water willingly, and it is recommended to use only water provided from the basic catalyst solution. It should be noted that, in the case where hydrolysis of the hydrolysis product is insufficient, it is necessary to use water in an amount equal to or larger than the theoretical amount necessary for hydrolysis of a residual hydrolyzable group. However, usually, the hydrolysis reaction is sufficiently carried out. After the re-condensation reaction, the catalyst is removed by water washing, and the resultant is concentrated, to thereby obtain a silsesquioxane mixture.

For the components of the silsesquioxane thus obtained, which vary depending on reaction conditions and the state of the hydrolysis product, a plurality of kinds of cage-type silsesquioxanes account for 70% or more of the entire silsesquioxane. The plurality of kinds of cage-type silsesquioxanes include, as components, 20 to 40% of T8 represented by the general formula (5), 40 to 50% of T10 represented by the general formula (6), and T12 represented by the general formula (7) as another component. When a siloxane mixture is allowed to stand at 20°C or less, T8 can be precipitated and separated as a needle crystal. The silicone resin of the present invention to be used in the present invention may be a mixture of T8 to T12, or a separated or concentrated product of one or two of T8 to T12. In addition, the silicone resin of the present invention to be used in the present invention is not limited to a silicone resin obtained by the above-mentioned production method.

In the present invention, a (meth)acrylic acid ester derivative polymerizable with the silicone resin of the present invention may be blended. A blending ratio of the silicone resin (a) of the present invention to the (meth)acrylic acid ester derivative (b) polymerizable with the silicone resin preferably falls within the range of (a):(b)=1 to 99:99 to 1. The term " (meth) acrylic acid ester derivative" as used herein refers to at least one kind of (meth) acryloyloxy group-containing compound such as a (meth)acrylate monomer having one or more (meth)acryloyloxy groups in the molecule (hereinafter, referred to as (meth) acrylate monomer) or a (meth)acrylate oligomer having two or more (meth)acryloyloxy groups in the molecule (hereinafter, referred to as (meth) acrylate oligomer). It should be noted that, in the present invention, the term "(meth)acryloyloxy group" refers to an acryloyloxy group and a methacryloyloxy group, the term "(meth)acrylic acid ester derivative" refers to an acrylic acid ester derivative and a methacrylic acid ester derivative, and the terms " (meth) acrylate monomer" and " (meth) acrylate oligomer" are used in the same manner.

Examples of the (meth)acrylate monomer include a monofunctional (meth) acrylate monomer having one (meth) acryloyloxy group in the molecule (hereinafter, referred to as monofunctional (meth)acrylate monomer), a bifunctional (meth)acrylate monomer having two (meth) acryloyloxy groups in the molecule (hereinafter, referred to as bifunctional (meth)acrylate monomer), and a polyfunctional (meth)acrylate monomer having at least three (meth)acryloyloxy groups in the molecule (hereinafter, referred to as polyfunctional (meth) acrylate monomer). One kind or two or more kinds of the (meth)acrylate monomers may be used.

Specific examples of the monofunctional (meth) acrylate monomer include tetrahydrofurfuryl (meth)acrylate, 2-hydroxyethyl (meth)acrylate, hydroxypropyl (meth)acrylate, 2-hydroxybutyl (meth)acrylate, 2-hydroxy-3-phenoxypropyl (meth)acrylate, isobutyl (meth)acrylate, t-butyl (meth)acrylate, 2-ethylhexyl (meth) acrylate, cyclohexyl (meth)acrylate, dicyclopentenyl (meth)acrylate, benzyl (meth)acrylate, isobornyl (meth)acrylate, phenoxyethyl (meth)acrylate, dicyclopentenyloxyethyl (meth)acrylate, dimethylaminoethyl (meth) acrylate, ethylcarbitol (meth) acrylate, trimethylolpropane mono(meth)acrylate, pentaerythritol mono (meth) acrylate, phenoxypolyethylene glycol (meth)acrylate, and carboxyl group-containing (meth)acrylate monomers such as 2-(meth)acryloyloxyethylphthalic acid, 2-(meth)acryloyloxyethylhexahydrophthalic acid, carboxyethyl (meth) acrylate, 2-(meth)acryloyloxyethylsuccinic acid, N- (meth) acryloyloxy-N',N'-dicarboxy-p-phenylenediamine, and 4-(meth)acryloyloxyethyl trimellitic acid. Further, the monofunctional (meth) acrylate monomer encompasses vinyl group-containing monomers such as N-vinylpyrrolidone, and (meth)acryloylamino group-containing monomers such as 4-(meth)acryloylamino-1-carboxymethylpiperidine.

The bifunctional (meth) acrylate monomer is typified by, for example, alkylene glycol di(meth)acrylates, polyoxyalkylene glycol di(meth)acrylates, halogen-substituted alkylene glycol di (meth) acrylates, di(meth)acrylates of fatty acid polyols, di(meth)acrylates of alkylene oxide adducts of bisphenol A or bisphenol F, and epoxy di (meth) acrylates of bisphenol A or bisphenol F. However, the bifunctional (meth) acrylate monomer is not limited thereto, and various bifunctional (meth)acrylate monomers may be used. Specific examples of the bifunctional (meth) acrylate monomer include ethylene glycol di(meth)acrylate, 1,3-butanediol di(meth)acrylate,1,4-butanedioldi(meth)acrylate,1,6-hexanediol di(meth)acrylate, 1,9-nonanediol di(meth)acrylate, neopentyl glycol di(meth)acrylate, trimethylolpropane di(meth)acrylate, pentaerythritol di(meth)acrylate, ditrimethylolpropane di (meth) acrylate, diethylene glycol di (meth) acrylate, triethylene glycol di(meth)acrylate, dipropylene glycol di(meth)acrylate, tripropylene glycol di(meth)acrylate, polyethylene glycol di(meth)acrylate, polypropylene glycol di(meth)acrylate, polytetramethylene glycol di(meth)acrylate, hydroxypivalic acid ester neopentyl glycol di(meth)acrylate, 2,2-bis[4-(meth)acryloyloxyethoxyethoxyphenyl]propane, 2,2-bis[4-(meth)acryioyloxyethoxyethoxycyclohexyl]propane, 2,2-bis[4-(meth)acryloyloxyethoxyethoxyphenyl]methane, hydrogenated dicyclopentadienyl di(meth)acrylate, and tris(hydroxyethyl)isocyanurate di(meth)acrylates.

Typical examples of the polyfunctional (meth) acrylate monomer include poly (meth) acrylates of trihydric or more aliphatic polyols, such as glycerin tri(meth)acrylate, trimethylolpropane tri(meth)acrylate, ditrimethylolpropane tri(meth)acrylate, ditrimethylolpropane tetra(meth)acrylate, pentaerythritol tri(meth)acrylate, pentaerythritol tetra(meth)acrylate, dipentaerythritol tetra(meth)acrylate, dipentaerythritol penta(meth)acrylate, and dipentaerythritol hexa(meth)acrylate. Other examples include a poly (meth) acrylate of a trihydric or more halogen-substitutedpolyol, a tri (meth) acrylate of an alkylene oxide adduct of glycerin, a tri (meth) acrylate of an alkylene oxide adduct of trimethylolpropane, 1,1,1-tris[(meth)acryloyloxyethoxyethoxy]propane, and tris (hydroxyethyl) isocyanurate tri(meth)acrylates.

Examples of the (meth)acrylate oligomer include a polyfunctional urethane (meth)acrylate oligomer which is bifunctional or more (hereinafter, referred to as polyfunctional urethane (meth)acrylate oligomer), a polyfunctional polyester (meth) acrylate oligomer which is bifunctional or more (hereinafter, referred to as polyfunctional polyester (meth) acrylate oligomer), and a polyfunctional epoxy (meth)acrylate oligomer which is bifunctional or more (hereinafter, referred to as polyfunctional epoxy (meth) acrylate oligomer). One kind or two or more kinds of the (meth)acrylate oligomers may be used.

An example of the polyfunctional urethane (meth) acrylate oligomer is a product of a urethane-forming reaction between a (meth)acrylate monomer having at least one (meth) acryloyloxy group and at least one hydroxy group per molecule and a polyisocyanate. An example of the polyfunctional urethane (meth) acrylate oligomer is a product of a urethane-forming reaction between an isocyanate compound obtained by allowing a polyol to react with a polyisocyanate and a (meth)acrylate monomer having one or more (meth) acryloyloxy groups and one or more hydroxy groups per molecule.

Examples of the (meth) acrylate monomer having at least one (meth)acryloyloxy group and at least one hydroxy group per molecule to be used in the urethane-forming reaction include 2-hydroxyethyl (meth) acrylate, 2-hydroxypropyl (meth) acrylate, 2-hydroxybutyl (meth) acrylate, 2-hydroxy-3-phenoxypropyl (meth) acrylate, glycerin di(meth)acrylate, trimethylolpropane di(meth)acrylate, pentaerythritol tri(meth)acrylate, and dipentaerythritol penta(meth)acrylate.

Examples of the polyisocyanate to be used in the urethane-forming reaction include polyisocyanates that are di- or triisocyanurates such as hexamethylene diisocyanate, lysine diisocyanate, isophorone diisocyanate, dicyclohexylmethane diisocyanate, tolylene diisocyanate, xylylene diisocyanate, diisocyanates obtained by hydrogenating aromatic isocyanates among these diisocyanates (diisocyanates such as hydrogenated tolylene diisocyanate and hydrogenated xylylene diisocyanate), triphenylmethane triisocyanate, and dimethylenetriphenyl triisocyanate, and polyisocyanates obtained by multimerizing diisocyanates.

As the polyol to be used in the urethane-forming reaction, there may be generally used aromatic, aliphatic, and alicyclic polyols, a polyester polyol, a polyether polyol, and the like. In general, examples of the aliphatic and alicyclic polyols include 1,4-butanediol, 1,6-hexanediol,neopentylglycol,ethylene glycol, propylene glycol, trimethylolethane, trimethylolpropane, dimethylolheptane, dimethylolpropionic acid, dimethylolbutylionic acid, glycerin, and hydrogenated bisphenol A.

The polyester polyol is a product obtained through a dehydration condensation reaction between the polyol and a polybasic carboxylic acid (anhydride). Compounds as specific examples of the polybasic carboxylic acid include (anhydride of) succinic acid, adipic acid, (anhydride of) maleic acid, (anhydride of) trimellitic acid, (anhydride of) hexahydrophthalic acid, (anhydride of) phthalic acid, isophthalic acid, and terephthalic acid. Further, examples of the polyether polyol include a polyalkylene glycol, and a polyoxy alkylene-modified polyol obtained through a reaction between the polyol or a phenol and an alkylene oxide.

Further, the polyfunctional polyester (meth)acrylate oligomer is obtained through a dehydration condensation reaction among (meth) acrylic acid, a polybasic carboxylic acid (anhydride), and a polyol. Examples of the polybasic carboxylic acid (anhydride) to be used in the dehydration condensation reaction include (anhydride of) succinic acid, adipic acid, (anhydride of) maleic acid, (anhydride of) itaconic acid, (anhydride of) trimellitic acid, (anhydride of) pyromellitic acid, (anhydride of) hexahydrophthalic acid, (anhydride of) phthalic acid, isophthalic acid, and terephthalic acid. Further, examples of the polyol to be used in the dehydration condensation reaction include 1,4-butanediol, 1,6-hexanediol, diethylene glycol, triethylene glycol, propylene glycol, neopentyl glycol, dimethylolheptane, dimethylolpropionic acid, dimethylolbutylionic acid, trimethylolpropane, ditrimethylolpropane, pentaerythritol, and dipentaerythritol.

Further, the polyfunctional epoxy (meth)acrylate oligomer is obtained through an addition reaction between a polyglycidyl ether and (meth)acrylic acid. Examples of the polyglycidyl ether include ethylene glycol diglycidyl ether, propylene glycol diglycidyl ether, tripropylene glycol diglycidyl ether, 1,6-hexanediol diglycidyl ether, and bisphenol A diglycidyl ether.

A suitable example of the curing catalyst to be used in the present invention is a photopolymerization initiator, and a generally known one may be used as the photopolymerization initiator. Specific examples thereof include, but are not limited to, benzoin, benzophenone, benzoin ethyl ether, benzoin isopropyl ether, 2,2-dimethoxy-2-phenylacetophenone, 1-hydroxycyclohexyl phenyl ketone, 2-hydroxy-2-methyl-1-phenylpropan-1-one, azobisisobutyronitrile, and benzoyl peroxide. The amount of the photopolymerization initiator used is 1 to 10 parts by weight, preferably 3 to 6 parts by weight relative to a total of 100 parts by weight of the silicone resin of the present invention and the (meth)acrylic ester derivative. When the amount is more than 10 parts by weight, a cured coating film is colored, while when the amount is less than 1 part by weight, a sufficient cured coating film cannot be obtained.

To the coating agent composition of the present invention, various additives such as a solvent, thermoplastic and thermosetting resin components, an organic/inorganic filler, and a pigment may be added, if necessary, without departing from the object of the present invention.

Of those, the solvent is preferably an alcohol-based solvent, e.g., an alcohol such as ethyl alcohol, n-propyl alcohol, isopropyl alcohol, or n-butyl alcohol, or an alkylene glycol monoalkyl ether such as ethylene glycol monomethyl ether, ethylene glycol monoethyl ether, ethylene glycol monobutyl ether, propylene glycol monomethyl ether, or propylene glycol monobutyl ether. In addition, an aromatic hydrocarbon such as toluene or xylene, an acetic acid ester such as ethyl acetate or butyl acetate, or a ketone such as methyl ethyl ketone or methyl isobutyl ketone may be used in combination with the alcohol-based solvent. It should be noted that the coating agent composition of the present invention is required to have a viscosity at room temperature within the range of from 1 to 10,000 mPa·s. However, in the case where the composition including the polymerizable resin compound including as a main component the polyorganosilsesquioxane and the curing catalyst for curing the compound does not have a viscosity within the range, the composition is diluted with any of the above-mentioned solvents.

In addition, examples of the resin component include thermoplastic and thermosetting monomers and curing agents, which are added to adjust the viscosity of the composition, and polymers polymerized in advance. Specific examples thereof may include bisphenol A type, bisphenol F type, and cresol novolac type epoxy resin monomers, low density polyethylene (LDPE), linear low density polyethylene (LLDPE), an ethylene-propylene rubber (EPR), an ethylene-propylene-diene monomer copolymer (EPDM), a styrene-butadiene-styrene copolymer (SBS), a styrene-isoprene-styrene copolymer (SIS), a styrene-ethylene/butylene-styrene copolymer (SEBS), an acrylonitrile-butadiene rubber (NBR), and vinyl chloride-based, urethane-based, polyester-based, polyamide-based, and fluororesin-based elastomers and rubbers. In the case of using a curable monomer such as an epoxy resin, a curing agent may be used. Examples of the curing agent include an amine-based curing agent such as triethylamine or imidazole, and an acid anhydride such as succinic anhydride or phthalic anhydride. The curing agents may be used alone or as a mixture of two or more kinds thereof, but are not limited thereto.

In addition, the organic/inorganic filler can be classified based on its applications into i) a mechanical/thermal reinforcement filler, ii) an electricalally/magnetically functional filler, iii) a flame-retardant filler, iv) an optically functional filler, v) a vibration-suppressing functional filler, and vi) a filler to be used for increasing viscosity or imparting thixotropy for the purpose of maintaining the shape of a film in application. Various fillers described in "Functional Filler List" published in 2000 by TECHNONET Corporation may be used, but are not limited thereto. Further, examples of the various additives may include, but are not limited to, a plasticizer, a f lame retardant, a thermal stabilizer, an antioxidant, a photostabilizer, a UV absorber, a lubricant, an antistatic, a mold release agent, a foaming agent, a nucleating agent, a colorant, a crosslinking agent, a dispersing aid, a thickener, and a leveling agent.

In the present invention, in order to obtain a coating film as a cured product of the curable coating material, the curable coating material may be rapidly cured by being applied by means of a known method such as spray coating, immersion coating, curtain flow coating, or roll coating, and then irradiated with UV rays from, for example, a low pressure mercury lamp, a medium pressure mercury lamp, a high pressure mercury lamp, an ultra-high pressure mercury lamp, a xenon lamp, a gallium lamp, or a metal halide lamp. Alternatively, the curable coating material may be cured by being irradiated with active energy rays other than the UV rays, such as α rays, β rays, γ rays, or electron rays. It is desirable that the cured coating film have a thickness of 1 to 100 µm, preferably 5 to 80 µm. In addition, the coating composition of the present invention preferably has a light transmittance of 80% or more at a wavelength of 400 to 700 nm in terms of 50-µm thickness after curing. It should be noted that in the case of employing the above-mentioned application method, the composition preferably has a viscosity of 1 to 100 mPa·s in application. However, the composition does not need to have a viscosity at room temperature within the range, and the temperature in application may be set by heating the composition to a temperature of 80 to 100°C to decrease the viscosity so that the the viscosity falls within the range of 1 to 100 mPa·s . In the case where the viscosity decreases by heating, the composition may have a viscosity at room temperature of 1 to 10,000 mPa·s.

### Advantageous Effects of Invention

According to the present invention, it is possible to produce the composition for forming a transparent coating having good mar resistance without using an additive such as a surfactant, and it is possible to form the coating film which has a transparent and glossy finish and has weather resistance and excellent resistance to abrasion and scratch when the composition is cured. Therefore, the present invention is very useful in automobile applications and the like which require a long-life coating film.

### Description of Embodiments

Hereinafter, the present invention is specifically described by way of examples, but is not limited to the following examples. It should be noted that synthesis of a polyorganosiloxane resin obtained in each example, preparation of a cured coating film of a coating agent composition, and evaluation of properties thereof were carried out by the following methods.

Taber abrasion test: Grinding wheel CS10F, 60±2 rpm, 500 g, 500 times.
Endurance test: according to WX-A of 6.1 Methods of exposure to xenon arc light sources of JIS A 1415 (Methods of exposure to laboratory light sources for polymeric material of buildings)

### Examples

### <Synthesis example of polyorganosilsesquioxane having cage-type structure>

In a reaction container equipped with a stirrer, a dropping funnel, and a thermometer, 40 ml of 2-propanol (IPA) as a solvent and an aqueous solution of 5% tetramethylammonium hydroxide (aqueous TMAH solution) as a basic catalyst were charged. 15 ml of IPA and 12.69 g of 3-methacryloxypropyltrimethoxysilane (MTMS: SZ-6300 manufactured by Dow Corning Toray Silicone Co., Ltd.) were added to the dropping funnel, and the solution of MTMS in IPA was added dropwise at room temperature over 30 minutes while stirring the reaction container. After completion of dropping of MTMS, the mixture was stirred for 2 hours without heating. After two-hour stirring, the solvent was removed under reduced pressure, and the residue was dissolved with 50 ml of toluene. The reaction solution was washed with saturated saline until the solution became neutral, and dehydrated with anhydrous magnesium sulfate. The anhydrous magnesium sulfate was removed by filtration, and the filtrate was concentrated, to thereby obtain 8.6 g of a hydrolysis product (silsesquioxane). The silsesquioxane was a colorless viscous liquid soluble in various organic solvents.

Next, 20.65 g of the silsesquioxane obtained above, 82 ml of toluene, and 3.0 g of an aqueous solution of 10% TMAH were added to a reaction container equipped with a stirrer, a Dean-Stark apparatus, and a cooling pipe, and the mixture was gradually heated to distill off water. The mixture was further heated up to 130°C, and subjected to a re-condensation reaction at a reflux temperature of toluene. The temperature of the reaction solution was 108°C. After refluxing of toluene, the mixture was stirred for 2 hours, and the reaction was terminated. The reaction solution was washed with saturated saline until the solution became neutral, and dehydrated with anhydrous magnesium sulfate. The anhydrous magnesium sulfate was removed by filtration, and the filtrate was concentrated, to thereby obtain 18.77 g of a cage-type silsesquioxane (mixture) of interest. The resultant cage-type silsesquioxane was a colorless viscous liquid soluble in various organic solvents.

The reaction product after the re-condensation reaction was subjected to liquid chromatography separation and mass spectrometry. As a result, molecular ions having molecular structures of the above-mentioned structural formulae (5), (6), and (7) bonded to ammonium ions were detected. The component ratio of T8:T10:T12 and others was found to be about 2:4:1:3. Accordingly, the product was confirmed to be a silicon resin including as a main component a cage-type structure.

### (Example 1)

30 parts by weight of the cage-type polysilsesquioxane having a methacryl group and obtained in the synthesis example, 65 parts by weight of dicyclopentanyl diacrylate (tricyclo[5, 2, 1,0^{2,6}]decanedimethylol diacrylate), 5 parts by weight of an urethane acrylate oligomer UF-503 manufactured by KYOEISYA CHEMICAL Co., LTD. , 2 parts by weight of 1-hydroxycyclohexyl phenyl ketone, 1 part by weight of bis(2,4,6-trimethylbenzoyl)-phenylphosphine oxide, 4 parts by weight of a UV absorber Tinuvin 384-2 manufactured by Ciba Specialty Chemicals Inc., 1 part by weight of bis(1,2,2,6,6-pentamethyl-4-piperidyl)sebacate, 1 part by weight of pentaerythritol tetrakis[3-(3,5-di-t-butyl-4-hydroxyphenyl)propionate, and 300 parts by weight of methyl ethyl ketone were mixed, to thereby obtain a coating agent composition of the present invention. The composition was found to have a viscosity of 58 mPa·s (E-type viscometer, 25°C).

Subsequently, the coating agent composition was applied onto a glass using a spin coater such that the film thickness became 20 µm. Next, the glass was treated at 60°C for 30 minutes using a hot-air circle oven to remove the solvent and irradiated with UV rays at 1,200 mj/cm² using a high-pressure mercury lamp to cure the coating agent composition, thereby obtaining a coating film. Then, a cutter was inserted into a space between the glass and the layer formed of the coating agent composition to confirm the presence or absence of peeling of the layer. As a result, peeling of the layer formed of the coating agent composition from the glass was not observed.

### (Example 2)

25 parts by weight of the cage-type polysilsesquioxane having a methacryl group and obtained in the synthesis example, 10 parts by weight of dicyclopentanyl diacrylate (tricyclo[5,2,1,0^{2,6}]decanedimethylol diacrylate), 65 parts by weight of dipentaerythritol hexaacrylate, 2 parts by weight of 1-hydroxycyclohexyl phenyl ketone, 1 part by weight of bis(2,4,6-trimethylbenzoyl)-phenylphosphine oxide, 4 parts by weight of a UV absorber Tinuvin 384-2 manufactured by Ciba Specialty Chemicals Inc., 1 part by weight of bis(1,2,2,6,6-pentamethyl-4-piperidyl)sebacate, 1 part by weight of pentaerythritol tetrakis[3-(3,5-di-t-butyl-4-hydroxyphenyl)propionate, and 300 parts by weight of butyl acetate were mixed, to thereby obtain a coating agent composition of the present invention. The composition was found to have a viscosity of 72 mPa·s (E-type viscometer, 25°C) .

Subsequently, a coating film was obtained by curing the coating agent composition in the same manner as in Example 1 . Then, a cutter was inserted into a space between the glass and the layer formed of the coating agent composition prepared in Example 2, to confirm the presence or absence of peeling of the layer. As a result, peeling of the layer formed of the coating agent composition from the glass was not observed.

### (Example 3)

12.5 parts by weight of the cage-type polysilsesquioxane having a methacryl group and obtained in the synthesis example, 5 parts by weight of dicyclopentanyl diacrylate (tricyclo[5,2,1,0^{2,6}]decanedimethylol diacrylate), 32.5 parts by weight of dipentaerythritol hexaacrylate, 166 parts by weight of organic solvent-dispersible colloidal silica MIBK-SD manufactured by NISSAN CHEMICAL INDUSTRIES, LTD. (silica content: 30% by weight), 2 parts by weight of 1-hydroxycyclohexyl phenyl ketone, 1 part by weight of bis(2,4,6-trimethylbenzoyl)-phenylphosphine oxide, 4 parts by weight of a UV absorber Tinuvin 384-2 manufactured by Ciba Specialty Chemicals Inc., 1 part by weight of bis(1,2,2,6,6-pentamethyl-4-piperidyl)sebacate, and 1 part by weight of pentaerythritol tetrakis[3-(3,5-di-t-butyl-4-hydroxyphenyl)propionate were mixed, to thereby obtain a coating agent composition of the present invention. The composition was found to have a viscosity of 98 mPa·s (E-type viscometer, 25°C).

Subsequently, a coating film was obtained by curing the coating agent composition in the same manner as in Example 1. Then, a cutter was inserted into a space between the glass and the layer formed of the coating agent composition prepared in Example 3, to confirm the presence or absence of peeling of the layer. As a result, peeling of the layer formed of the coating agent composition from the glass was not observed.

### (Example 4)

30 parts by weight of the cage-type polysilsesquioxane having a methacryl group and obtained in the synthesis example, 10 parts by weight of dicyclopentanyl diacrylate (tricyclo[5,2,1,0^{2,6}]decanedimethylol diacrylate), 60 parts by weight of dipentaerythritol hexaacrylate, 2 parts by weight of 1-hydroxycyclohexyl phenyl ketone, 1 part by weight of bis(2,4,6-trimethylbenzoyl)-phenylphosphine oxide, 4 parts by weight of a UV absorber Tinuvin 384-2 manufactured by Ciba Specialty Chemicals Inc., 1 part by weight of bis(1,2,2,6,6-pentamethyl-4-piperidyl)sebacate, and 1 part by weight of pentaerythritol tetrakis[3-(3,5-di-t-butyl-4-hydroxyphenyl)propionate were mixed, to thereby obtain a coating agent composition of the present invention.

Subsequently, the coating agent composition was heated to 80 to 100°C to decrease the viscosity to 10 to 100 mPa·s, and a glass was immersed therein and lifted up to apply the composition so that the film thickness became 20 µm. Subsequently, a coating film was obtained by curing the coating agent composition in the same manner as in Example 1. Then, a cutter was inserted into a space between the glass and the layer formed of the coating agent composition prepared in Example 4, to confirm the presence or absence of peeling of the layer. As a result, peeling of the layer formed of the coating agent composition from the glass was not observed.

For the coating films obtained in Examples 1, 2, 3, and 4 above, the initial transmittance and initial resistance to Taber abrasion, and transmittance and resistance to Taber abrasion after the endurance test were measured. Table 1 shows the resultant measurement results.

**[Table 1]**

| | Initial time point | | After endurance test | |
|---|---|---|---|---|
| | Transmittance | Resistance to abrasion | Transmittance | Resistance to abrasion |
| Example 1 | 92% | 0.5 | 92% | 0.7 |
| Example 2 | 91% | 0.4 | 90% | 0.5 |
| Example 3 | 91% | 0.2 | 90% | 0.2 |
| Example 4 | 92% | 0.5 | 92% | 0.7 |

No peeling and crack of the coating film were observed after the endurance test.

## Claims

1. A coating agent composition, comprising:
a polymerizable resin compound including as a main component a polyorganosilsesquioxane; and
a curing catalyst for curing the polymerizable resin compound,
wherein the coating agent composition has a viscosity of 1 to 10,000 mPa·s.

2. A coating agent composition according to claim 1, wherein the polymerizable resin compound comprises a silicone resin including as a main component a polyorganosilsesquioxane which is represented by the following general formula (1):
[RSiO_{3/2}]n (1)
where R represents an organic functional group having a (meth)acryloyl group, and n represents 8, 10, or 12, and which has a cage-type structure in a structural unit.

3. A coating agent composition according to claim 1 or 2, wherein the polymerizable resin compound comprises a mixture including:
a silicone resin (a) including as a main component a polyorganosilsesquioxane which is represented by the following general formula (1):
[RSiO_{3/2}]n (1)
where R represents an organic functional group having a (meth)acryloyl group, and n represents 8, 10, or 12,
and which has a cage-type structure in a structural unit; and
an unsaturated compound (b) including in a molecule at least one unsaturated group represented by -R³-CR⁴=CH₂ or -CR⁴=CH₂, where R³ represents an alkylene group, an alkylidene group, or an -oco- group, and R⁴ represents a hydrogen atom or an alkyl group, and being radically copolymerizable with the silicone resin,
the silicone resin (a) and the unsaturated compound (b) being blended at a weight ratio of 1 to 99:99 to 1.

4. A coating agent composition according to any one of claims 1 to 3 , wherein the coating agent compositionhas a light transmittance of 80% or more at a wavelength of 400 to 700 nm in terms of 50-µm thickness after curing.

5. A coating agent composition according to any one of claims 1 to 4, wherein the coating agent composition has a viscosity of 1 to 100 mPa·s when heated at 80 to 100°C.
